(19) Europäisches Patentamt
European Patent Office
Office européen des brevets

(11) **EP 1 519 023 B1**

(12) **FASCICULE DE BREVET EUROPEEN**

(45) Date de publication et mention
de la délivrance du brevet:
**28.05.2008 Bulletin 2008/22**

(51) Int Cl.:
*F02D 41/18* *(2006.01)*    *F02D 41/00* *(2006.01)*
*F02D 41/24* *(2006.01)*

(21) Numéro de dépôt: **04300628.7**

(22) Date de dépôt: **27.09.2004**

(54) **Procédé et dispositif de contrôle du fonctionnement d'un moteur à allumage par compression de véhicule automobile, suralimenté en air.**

Prozess und Einrichtung zur Steuerung eines aufgeladenen, selbstzündenden Verbrennungsmotors für ein Fahrzeug

Process and system for controlling an air charged compression ignition combustion engine for a vehicle

(84) Etats contractants désignés:
**AT BE BG CH CY CZ DE DK EE ES FI FR GB GR HU IE IT LI LU MC NL PL PT RO SE SI SK TR**

(30) Priorité: **25.09.2003 FR 0311259**

(43) Date de publication de la demande:
**30.03.2005 Bulletin 2005/13**

(73) Titulaire: **RENAULT S.A.S.**
**92100 Boulogne Billancourt (FR)**

(72) Inventeurs:
• **Aouchiche, Kamal**
**93120 La Courneuve (FR)**
• **Hembert, Brice**
**83340 Le Luc (FR)**

(56) Documents cités:
**EP-A- 1 024 264      DE-A- 10 122 293**
**DE-A- 10 146 317      DE-A- 19 547 496**
**DE-A- 19 801 395      DE-A- 19 920 498**

**Description**

La présente invention a pour objet un procédé et un dispositif de contrôle du fonctionnement d'un moteur à allumage par compression de véhicule automobile, moteur fonctionnant à une pression supérieure à la pression atmosphérique par suralimentation de l'air frais au moyen d'un turbocompresseur.

Le turbocompresseur équipant ce type de moteur comprend une turbine et un compresseur augmentant la quantité d'air admise dans les cylindres du moteur. La turbine est placée à la sortie du collecteur d'échappement du moteur et est entraînée par les gaz d'échappement. La puissance fournie par les gaz d'échappement à la turbine peut être modulée en installant une soupape de décharge ou en prévoyant des ailettes de géométrie variable sur la turbine (turbine à géométrie variable ou TGV). Le compresseur est monté sur le même axe mécanique que la turbine. Il comprime l'air qui entre dans le collecteur d'admission du moteur. D'une manière générale, la commande du moteur est gérée par un ensemble de capteurs et d'actionneurs en fonction d'un ensemble de lois de commande, dites "stratégies logicielles", et de paramètres de caractérisation ou calibrations du moteur. L'ensemble de ces lois est mémorisé dans une unité de commande électronique ou UCE, qui est alors capable d'émettre les signaux de pilotage nécessaires à la gestion du fonctionnement du moteur.

Lorsque le conducteur du véhicule souhaite une certaine puissance du moteur, il appuie sur la pédale d'accélérateur, ce qui entraîne l'émission d'un signal de position transmis à l'unité de commande électronique, laquelle peut en déduire une consigne de débit du carburant à injecter dans le moteur pour l'obtention de la puissance demandée par le conducteur. Le débit d'air frais peut être mesuré au moyen d'un débitmètre ou de tout autre organe analogue, ou encore calculé par un dispositif d'estimation, et la pression de suralimentation de l'air frais peut être mesurée par un capteur de pression. Le contrôle des débits de carburant, d'air frais, et de recirculation de gaz, injectés dans le moteur permet de limiter les polluants, notamment les particules et les oxydes d'azote, présents dans les gaz d'échappement du moteur, comme exposé dans DE19920498.

Tous ces besoins sont déterminés à partir d'essais. Pour chaque régime moteur, des courbes sont établies, et on identifie un débit d'air frais injecté optimal et une pression de suralimentation optimale, respectant les contraintes du moteur, pour minimiser les émissions de polluants. On entend par optimal le fait d'assurer une pollution minimale. Ces mesures sont faites sur la base d'un moteur de caractéristiques dites "nominales", c'est-à-dire sur un moteur de référence. Pour les moteurs réels, tous légèrement différents du moteur de référence, il existe des dispersions de fabrications impliquant des dispersions de caractéristiques de débitmètre, comme le signal de sortie du débitmètre permettant de déduire un débit associé, ainsi que des dispersions de caractéristiques de remplissage des moteurs, dont une grandeur $\eta_v$ est représentative. Ces dispersions de fabrication entraînent une dispersion des rejets de polluant dans les gaz d'échappement des moteurs.

Au vu de ce qui précède, la présente invention a pour objet un procédé et un dispositif qui permettent de réduire, pour chaque moteur, la dispersion des taux de polluants émis dans les gaz d'échappement du moteur, malgré les dispersions de fabrication des dispositifs d'admission des moteurs.

Ainsi, selon l'invention, il est proposé un procédé de contrôle du fonctionnement d'un moteur à allumage par compression de véhicule automobile, suralimenté en air. On établit une cartographie d'apprentissage, lors des premiers roulages du véhicule, soit d'une grandeur ($\eta_v$) représentative de l'aptitude du moteur à aspirer du gaz, soit d'une caractéristique débit/tension d'un débitmètre mesurant le débit d'alimentation en air frais du moteur. On quantifie les deux paramètres que sont le débit d'alimentation en air frais du moteur (1) mesuré ou corrigé, et la pression de suralimentation du moteur (1) mesurée ou corrigée, et on asservit les deux paramètres sur des valeurs de consigne respectives correspondant à des stratégies de commande du moteur.

Il est ainsi possible de réduire les écarts de rejets de polluants dus à une dispersion de fabrication des systèmes d'admission des moteurs, des débitmètres, et des capteurs de pression de suralimentation.

On détermine une valeur corrigée de la pression de suralimentation ou du débit d'alimentation en air frais du moteur à partir d'une cartographie nominale préalablement établie avec un moteur de référence et d'une cartographie apprise en l'absence de recyclage des gaz d'échappement du moteur.

Les cartographies nominales sont établies avec un moteur de référence en l'absence de recyclage des gaz d'échappement du moteur pour des points de fonctionnement prédéterminés.

Dans un mode de mise en oeuvre préféré, on établit une cartographie nominale de la grandeur ($\eta_v$) représentative de l'aptitude du moteur de référence à aspirer du gaz, en l'absence de recyclage des gaz d'échappement du moteur, pour des points de fonctionnement prédéterminés, et dans laquelle sont stockées des valeurs de la grandeur ($\eta_v$) représentative de l'aptitude du moteur de référence à aspirer du gaz en fonction de paramètres de fonctionnement comprenant le régime de rotation du moteur et la densité du gaz présent dans le collecteur d'admission.

Dans un mode de mise en ouvre avantageux, on établit une cartographie d'apprentissage de la grandeur ($\eta_v$) représentative de l'aptitude du moteur à aspirer du gaz en fonction de paramètres de fonctionnement du moteur. Ces paramètres comprennent la densité du gaz dans le collecteur d'admission du moteur et le régime de rotation du moteur. On mesure le débit d'alimentation en air frais pour déduire ladite grandeur représentative ($\eta_v$) de l'aptitude du moteur à aspirer du gaz. Cette cartographie est établie en l'absence de recyclage de gaz d'échappement du moteur.

Cette cartographie d'apprentissage est réalisée lors des premiers roulages du véhicule et va permettre de caractériser ce moteur par rapport au moteur de référence.

Dans un mode de mise en oeuvre préféré, on corrige le débit d'alimentation en air frais en utilisant une fonction prédéterminée, prenant en entrée des paramètres comprenant les données des cartographies nominale et d'apprentissage de la grandeur représentative ($\eta_v$) et apte à compenser l'influence des dispersions de fabrication sur les émissions de polluants du moteur. De plus, on régule d'une part la pression de suralimentation sur une valeur de consigne, et d'autre part le débit corrigé d'alimentation en air frais sur une valeur de consigne.

Dans un mode de mise en oeuvre avantageux, on corrige la pression de suralimentation en utilisant une fonction prédéterminée, prenant en entrée des paramètres comprenant les données des cartographies nominale et d'apprentissage de la grandeur représentative ($\eta_v$) et apte à compenser l'influence des dispersions de fabrication sur les émissions de polluants du moteur. De plus, on régule d'une part la pression de suralimentation corrigée sur une valeur de consigne, et d'autre part le débit d'alimentation en air frais sur une valeur de consigne.

Dans un mode de mise en oeuvre préféré, on établit préalablement une cartographie du débit d'alimentation en air frais en fonction de paramètres de fonctionnement du débitmètre. On simule artificiellement des variations d'estimation du débit de gaz aspiré par le moteur, résultant de la fabrication du moteur, et on mesure le débit d'alimentation en air frais résultant. La cartographie est établie sans recyclage de gaz d'échappement du moteur.

Cette cartographie d'apprentissage est réalisée lors des premiers roulages du véhicule et va permettre de caractériser ce moteur par rapport au moteur de référence.

Dans un mode de mise en oeuvre avantageux, on corrige le débit d'alimentation en air frais en utilisant une fonction prédéterminée, prenant en entrée des paramètres comprenant les données des cartographies nominale et d'apprentissage du débit d'alimentation en air frais et apte à compenser l'influence des dispersions de fabrication sur les émissions de polluants du moteur. De plus, on régule d'une part la pression de suralimentation sur une valeur de consigne, et d'autre part le débit corrigé d'alimentation en air frais sur une valeur de consigne.

Dans un mode de mise en oeuvre préféré, on corrige la pression de suralimentation en utilisant une fonction prédéterminée, prenant en entrée des paramètres comprenant les données des cartographies nominale et d'apprentissage du débit d'alimentation en air frais et apte à compenser l'influence des dispersions de fabrication sur les émissions de polluants du moteur. De plus, on régule d'une part la pression de suralimentation corrigée sur une valeur de consigne, et d'autre part le débit d'alimentation en air frais sur une valeur de consigne.

Selon l'invention, il est également proposé un dispositif de contrôle du fonctionnement d'un moteur à allumage par compression de véhicule automobile, suralimenté en air. Le dispositif comprend un débitmètre mesurant le débit d'alimentation en air frais du moteur, un capteur de pression mesurant la pression de suralimentation du moteur, et un système d'asservissement du débit d'alimentation en air frais et de la pression de suralimentation du moteur sur des valeurs respectives correspondant à des stratégies de commande du moteur. Le système d'asservissement comprend des moyens de régulation qui reçoivent des valeurs de consigne du débit d'alimentation en air frais et de la pression de suralimentation, et les valeurs du débit d'alimentation en air frais et de la pression de suralimentation respectivement quantifiées par une mesure du débitmètre, et par une mesure du capteur de mesure de la pression de suralimentation, afin de fournir au moteur des valeurs modifiées du débit d'alimentation en air frais et de la pression de suralimentation.

En outre, il est proposé un dispositif de contrôle du fonctionnement d'un moteur à allumage par compression de véhicule automobile, suralimenté en air. Le dispositif comprend un capteur de pression mesurant la pression de suralimentation du moteur, et un système d'asservissement du débit d'alimentation en air frais et de la pression de suralimentation du moteur sur des valeurs respectives correspondant à des stratégies de commande du moteur. Le système d'asservissement comprend des moyens de régulation qui reçoivent des valeurs de consigne du débit d'alimentation en air frais et de la pression de suralimentation, et les valeurs du débit d'alimentation en air frais et de la pression de suralimentation respectivement quantifiées par une estimation par une unité de commande électronique, et par une mesure du capteur de mesure de la pression de suralimentation, afin de fournir au moteur des valeurs modifiées du débit d'alimentation en air frais et de la pression de suralimentation.

D'autres buts, caractéristiques et avantages de l'invention apparaîtront à la lecture de la description suivante, donnée uniquement à titre d'exemple non limitatif et faite en référence aux dessins annexés sur lesquels :

- la figure 1 illustre schématiquement les principaux éléments d'un moteur à allumage par compression suralimenté en air, selon l'invention.
- les figures 2, 3, 4 et 5 illustrent des stratégies selon le procédé de l'invention.

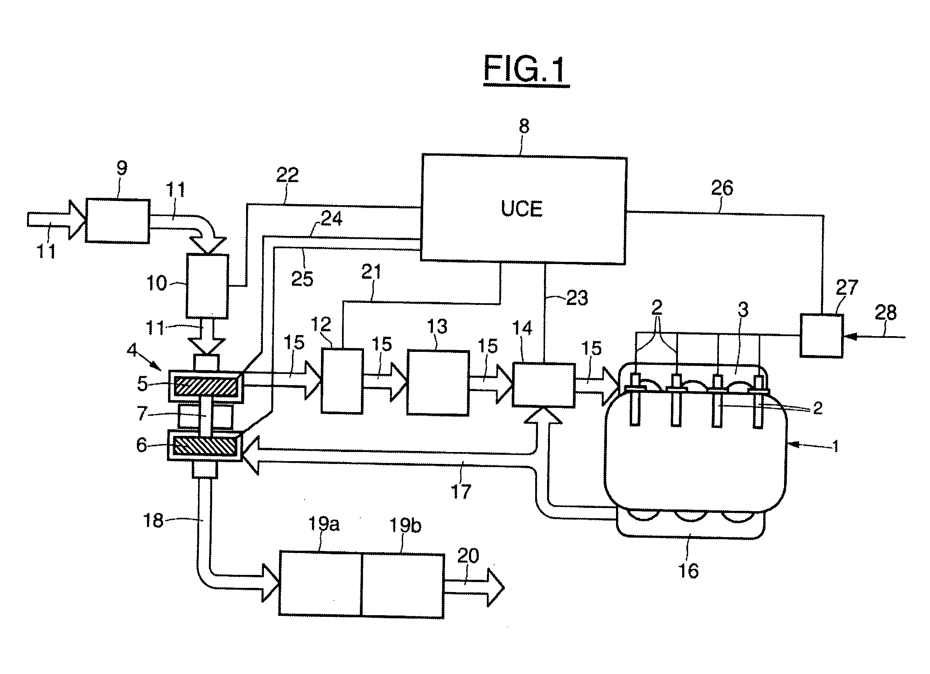

Sur la figure 1, se trouve représenté un moteur diesel 1 à quatre cylindres, chaque cylindre étant associé à un dispositif d'injection de carburant, référencé 2. L'air frais pénétrant dans le répartiteur d'admission 3 du moteur 1 traverse au préalable un turbocompresseur 4 comprenant un compresseur 5 et une turbine 6 montés sur un arbre commun 7. Les débits fournis par le compresseur 5 et la turbine 6 sont commandés par l'unité de commande électronique 8.

L'air frais, prélevé à l'extérieur, traverse tout d'abord un filtre à air 9, puis un débitmètre 10, avant de pénétrer dans le compresseur 5. La circulation d'air à la pression atmosphérique est symbolisée sur la figure 1 par les flèches 11. L'air comprimé issu du compresseur 5 traverse, dans l'exemple illustré, un capteur de pression 12 mesurant la pression de suralimentation du moteur, puis un échangeur de chaleur 13 qui permet de refroidir les gaz admis. En sortie de l'échangeur 13, l'air comprimé refroidi traverse une vanne à trois voies 14 capable de réguler un débit de recirculation des gaz d'échappement avant de pénétrer dans le répartiteur d'admission 3. La circulation de l'air comprimé est symbolisée par les flèches 15 sur la figure 1.

Les gaz d'échappement issus du collecteur d'échappement 16, après combustion dans le moteur 1, sont dirigés en partie vers la vanne 14, afin d'être en partie mis en recirculation après mélange dans l'air d'admission 15 dirigé vers le répartiteur d'admission 3. L'autre partie des gaz d'échappement, dont l'écoulement est symbolisé par la flèche 17, est amenée sur la turbine 6 afin d'entraîner le compresseur 5. A la sortie de la turbine 6, les gaz d'échappement, dont le flux est symbolisé par la flèche 18, traversent, dans l'exemple illustré, un filtre à particules optionnel 19a et/ou un filtre catalytique pour oxydes d'azote optionnel 19b, avant d'être rejetés dans l'atmosphère par le pot d'échappement 20. En effet, l'invention peut permettre de se passer de filtre à particules

L'unité de commande électronique (UCE) 8 reçoit différents signaux permettant le fonctionnement du dispositif de régulation de l'invention. L'unité de commande électronique 8 reçoit en particulier par la connexion 21 un signal du capteur de pression 12 indiquant la valeur de la pression de suralimentation. Le débit d'air frais, mesuré par le débitmètre 10, est amené sous la forme d'un signal par la connexion 22 à l'unité de commande électronique 8.

L'unité de commande électronique 8 émet différents signaux permettant la gestion du fonctionnement du moteur 1 ainsi que d'autres organes du véhicule, non représentés sur la figure 1. L'unité de commande électronique 8 émet en particulier par la connexion 23, un signal de commande de pilotage de la vanne 14. L'unité de commande électronique 8 régule la pression de suralimentation en agissant sur l'orientation d'ailettes internes du compresseur 5 et/ou de la turbine 6 au moyen des connexions 24 et 25. L'unité de commande électronique 8 émet également, par la connexion 26, un signal de commande pour un régulateur 27 du débit de carburant injecté dans le moteur 1 par les différents dispositifs d'injection 2. A cet effet, le carburant provenant du réservoir du véhicule est amené à l'organe de régulation 27 par la conduite 28 et le carburant est ensuite distribué par la conduite 29 aux différents injecteurs 2. L'unité de commande électronique 8 comprend des moyens logiciels aptes à gérer la commande de régulation de la pression de suralimentation et du débit d'alimentation en air frais du moteur 1.

L'invention a pour objet une régulation du débit d'alimentation en air frais et de la pression de suralimentation du moteur afin de corriger les dispersions de rejets en polluants dans les gaz d'échappement entre les différents moteurs en sortie d'usine, dues aux dispersions de fabrication des systèmes d'admission des moteurs, des débitmètres et des capteurs de pression de suralimention.

La valeur du débit d'alimentation en air frais d'un type de moteur particulier fait l'objet d'une cartographie nominale en fonction de la tension du débitmètre 10. Cette cartographie nominale est établie en l'absence de recirculation de gaz d'échappement et avec un dispositif externe précis de mesure du débit d'air. L'absence de recirculation des gaz d'échappement est obtenue par action sur la vanne 14.

On établit également une cartographie nominale d'une grandeur ($\eta_v$) représentative de l'aptitude du moteur 1 à aspirer du gaz, en l'absence de recyclage de gaz d'échappement du moteur 1. Cette cartographie nominale est établie pour des points de fonctionnement prédéterminés du moteur de référence, et dans laquelle sont stockées des valeurs de la grandeur ($\eta_v$) représentative de l'aptitude du moteur de référence à aspirer du gaz en fonction de paramètres de fonctionnement dudit moteur de référence.

Ces cartographies nominales sont établies pour des points de fonctionnement choisis de manière à couvrir essentiellement la gamme complète de fonctionnement du moteur.

La phase d'apprentissage s'effectue en l'absence de recirculation de gaz d'échappement.

Cette phase d'apprentissage s'effectue lors des premiers roulages du véhicule.

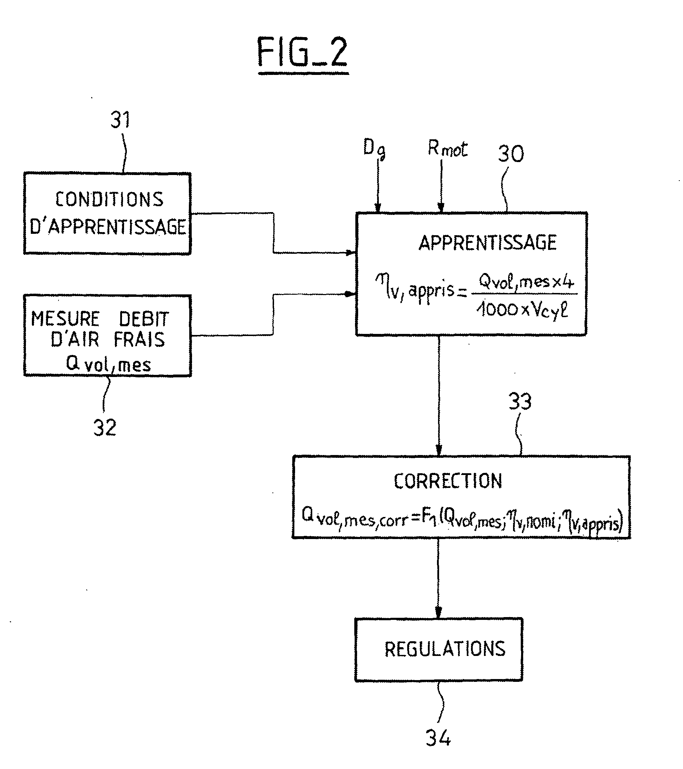

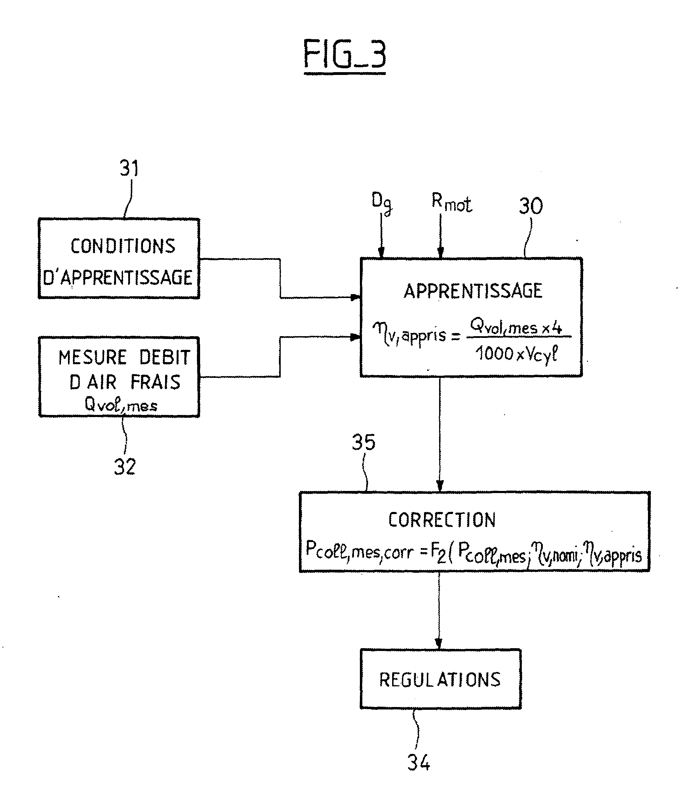

On définit alors deux stratégies, illustrées par les figures 2 et 3 basées sur une phase d'apprentissage établissant une cartographie d'apprentissage de la grandeur $\eta_v$, représentative de l'aptitude du moteur 1 à aspirer du gaz.

Une première stratégie, illustrée par la figure 2, consiste à établir une cartographie d'apprentissage de la grandeur ($\eta_v$) représentative de l'aptitude du moteur 1 à aspirer du gaz en fonction de paramètres de fonctionnement du moteur 1 comprenant la densité Dg du gaz dans le collecteur d'admission 3 du moteur 1 et le régime Rmot de rotation du moteur 1 (étape 30). Cela est effectué par l'unité de commande électronique 8 qui comprend des moyens prévus à cet effet, au moyen de la relation :

$$\eta_{v,appris} = Q_{vol,mes} * \frac{4}{1000.V_{cyl}}$$

dans laquelle

$\eta_{v,appris}$ :  valeur de la grandeur $\eta_v$, représentative de l'aptitude du moteur 1 à aspirer du gaz, pour un couple de valeurs du régime de rotation du moteur 1 et de la densité du gaz dans le collecteur d'admission 3 du moteur 1, de la cartographie d'apprentissage de la grandeur $\eta_v$;

$Q_{vol,mes}$ :  valeur du débit d'alimentation en air frais mesuré avec les ailettes du turbocompresseur 4 fermées, en mg/coup, un coup étant l'intervalle de temps séparant deux positions successives haute et basse du piston;

$V_{cyl}$ :  cylindrée du moteur, en litres ;

Pour déclencher une période d'apprentissage, il faut que le moteur 1 remplisse préalablement des conditions appelées conditions d'apprentissage (étape 31). Ces conditions comprennent une coupure de recirculation de gaz d'échappement au moyen de la vanne 14, un moteur chaud, une stabilité du régime de rotation du moteur, une stabilité du débit d'alimentation en air frais, et une stabilité de la pression de suralimentation (étape 31). En outre, on mesure le débit d'alimentation en air frais avec les ailettes du turbocompresseur 4 fermées (étape 32).

Quand ces conditions sont remplies, et que l'on est dans une période d'apprentissage (étape 30), l'unité de commande électronique 8 remplit alors une cartographie d'apprentissage de la grandeur $\eta_v$, représentative de l'aptitude du moteur 1 à aspirer du gaz. Une fois la cartographie d'apprentissage remplie, l'unité de commande électronique 8, pour chaque mesure de débit d'alimentation en air frais, corrige le débit d'alimentation en air frais en utilisant une fonction prédéterminée, prenant en entrée des paramètres comprenant les données des cartographies nominale et d'apprentissage de la grandeur représentative ($\eta_v$) ainsi que la valeur de la mesure du débit d'air frais $Q_{vol,mes}$, et apte à compenser l'influence des dispersions de fabrication sur les émissions de polluants du moteur(étape 33). Ce correctif est effectué au moyen de la relation suivante :

$$Q_{vol,mes,corr} = F_1\left(Q_{vol,mes}; \eta_{v,nomi}; \eta_{v,appris}\right)$$

dans laquelle:

$F_1$ : fonction prédéterminée ;

$\eta_{v,nomi}$ :  valeur de la grandeur $\eta_v$, représentative de l'aptitude du moteur de référence à aspirer du gaz, pour un couple de valeurs du régime de rotation du moteur de référence et de la densité du gaz dans le collecteur d'admission 3 du moteur de référence, de la cartographie nominale de la grandeur $\eta_v$;

$\eta_{v,appris}$:  valeur de la grandeur $\eta_v$, représentative de l'aptitude du moteur 1 à aspirer du gaz, pour un couple de valeurs du régime de rotation du moteur 1 et de la densité du gaz dans le collecteur d'admission 3 du moteur 1, de la cartographie d'apprentissage de la grandeur $\eta_v$ ;

$Q_{vol,mes}$:  valeur du débit d'alimentation en air frais mesuré avec les ailettes du turbocompresseur 4 fermées, en mg/coup, un coup étant l'intervalle de temps séparant deux positions successives haute et basse du piston ;

$Q_{vol,mes,com}$ :  valeur du débit d'alimentation en air frais corrigé, en mg/coup, un coup étant l'intervalle de temps séparant deux positions successives haute et basse du piston ;

Puis, l'unité de commande électronique 8 régule d'une part la pression de suralimentation sur sa valeur de consigne, et d'autre part le débit corrigé d'alimentation en air frais sur sa valeur de consigne (étape 34).

Une deuxième stratégie, illustrée par figure 3, comprend les mêmes étapes 30, 31 et 32 que la première. Une fois la cartographie d'apprentissage remplie, l'unité de commande électronique 8, pour chaque mesure de pression de suralimentation, corrige la pression de suralimentation en utilisant une fonction prédéterminée, prenant en entrée des paramètres comprenant la valeur de la mesure de la pression de suralimentation les données des cartographies nominale et d'apprentissage de la grandeur représentative ($\eta_v$) et apte à compenser l'influence des dispersions de fabrication sur les émissions de polluants du moteur(étape 35). Ce correctif est effectué au moyen de la relation suivante :

$$P_{coll,mes,corr} = F_2\left(P_{coll,mes}; \eta_{v,nomi}; \eta_{v,appris}\right)$$

dans laquelle :

$F_2$ : fonction prédéterminée ;

$\eta_{v,nomi}$ :  valeur de la grandeur $\eta_v$, représentative de l'aptitude du moteur de référence à aspirer du gaz, pour un couple de valeurs du régime de rotation du moteur de référence et de la densité du gaz dans le collecteur d'admission 3 du moteur de référence, de la cartographie nominale de la grandeur $\eta_v$;

$\eta_{v\ appris}$ :  valeur de la grandeur $\eta_v$, représentative de l'aptitude du moteur 1 à aspirer du gaz, pour un couple de valeurs du régime de rotation du moteur 1 et de la densité du gaz dans le collecteur d'admission 3 du moteur 1, de la cartographie d'apprentissage de la grandeur $\eta_v$ ;

$P_{coll,mes}$ :  valeur de la pression de suralimentation mesurée, en bars ;

$P_{coll,mes,corr}$ :  valeur de la pression de suralimentation corrigée, en bars ;

Puis, l'unité de commande électronique 8 régule d'une part la pression de suralimentation corrigée sur sa valeur de consigne, et d'autre part le débit d'alimentation en air frais sur sa valeur de consigne (étape 36).

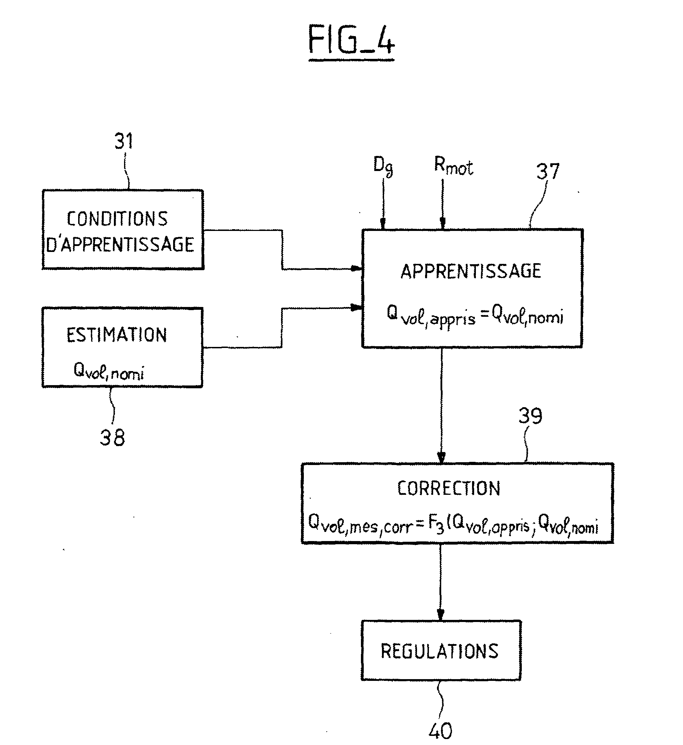

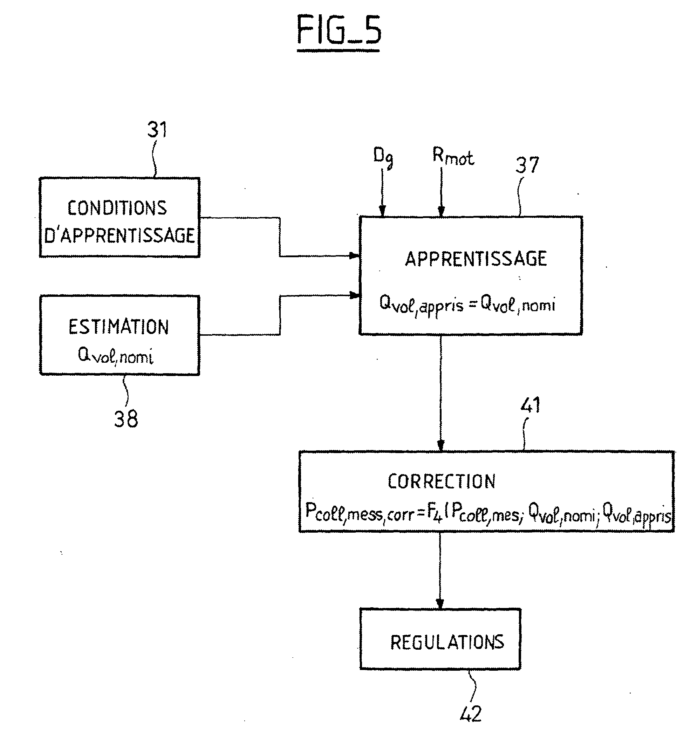

On peut également utiliser deux autres stratégies, représentées sur les figures 4 et 5, basées sur une phase d'apprentissage établissant une caractéristique débit/tension du débitmètre mesurant le débit d'alimentation en air frais du moteur.

Une troisième stratégie, illustrée par la figure 4, consiste à établir une cartographie d'apprentissage du débit d'alimentation en air frais en fonction du signal de sortie du débitmètre 10 qui est généralement une tension $U_{deb,mes}$ (étape 37). Cela est effectué par l'unité de commande électronique 8 qui comprend des moyens prévus à cet effet. Pour déclencher une période d'apprentissage, il faut que le moteur 1 remplisse préalablement des conditions appelées conditions d'apprentissage (étape 31). Ces conditions comprennent une coupure de recirculation de gaz d'échappement au moyen de la vanne 14, un moteur chaud, une stabilité du régime de rotation du moteur, une stabilité du débit d'alimentation en air frais, et une stabilité de la pression de suralimentation (étape 31). Il faut de plus, que l'on estime le débit d'alimentation en air frais avec pour référence les ailettes du turbocompresseur 4 fermées, au moyen de la cartographie nominale du débit d'alimentation, en air frais (étape 38). Quand ces conditions sont remplies, et que l'on est dans une période d'apprentissage (étape 37), l'unité de commande électronique 8 remplit alors une cartographie d'apprentissage du débit d'alimentation en air frais. Une fois la cartographie d'apprentissage remplie, l'unité de commande électronique 8, pour chaque estimation de débit d'alimentation en air frais, corrige le débit d'alimentation en air frais en utilisant une fonction prédéterminée, prenant en entrée des paramètres comprenant les données des cartographies nominale et d'apprentissage du débit d'alimentation en air frais et apte à compenser l'influence des dispersions de fabrication sur les émissions de polluants du moteur (étape 39). Ce correctif est effectué au moyen de la relation suivante :

$$Q_{vol,mes,corr} = F_3\left(Q_{vol,appris};Q_{vol,nomi}\right)$$

dans laquelle :

$F_3$ : fonction prédéterminée ;

$Q_{vol,appris}$ :  valeur du débit d'alimentation en air frais pour un signal de sortie du débitmètre, de la cartographie d'apprentissage du débit d'alimentation en air frais, en mg/coup, un coup étant l'intervalle de temps séparant deux positions successives haute et basse du piston ;

$Q_{vol,nomi}$ :  valeur du débit d'alimentation en air frais pour un signal de sortie du débitmètre, de la cartographie nominale du débit d'alimentation en air frais, en mg/coup, un coup étant l'intervalle de temps séparant deux positions successives haute et basse du piston ;

Puis, l'unité de commande électronique 8 régule d'une part la pression de suralimentation sur sa valeur de consigne, et d'autre part le débit corrigé d'alimentation en air frais sur sa valeur de consigne (étape 40).

Une quatrième stratégie, illustrée par la figure 5, comprend les mêmes étapes 37, 31 et 38 que la troisième. Une fois la cartographie d'apprentissage remplie, l'unité de commande électronique 8, pour chaque mesure de pression de suralimentation, corrige la pression de suralimentation, en utilisant une fonction prédéterminée, prenant en entrée des paramètres comprenant la pression de suralimentation mesurée, ainsi que les données des cartographies nominale et d'apprentissage du débit d'alimentation en air frais et apte à compenser l'influence des dispersions de fabrication sur les émissions de polluants du moteur (étape 41). Ce correctif est effectué au moyen de la relation suivante :

$$P_{coll,mes,corr} = F_4\left(P_{coll,mes} ; Q_{vol,nomi} ; Q_{vol,appris}\right)$$

dans laquelle :

F$_4$ : fonction prédéterminée ;

Q$_{vol,appris}$ :  valeur du débit d'alimentation en air frais pour un signal de sortie du débitmètre, de la cartographie d'apprentissage du débit d'alimentation en air frais, en en mg/coup, un coup étant l'intervalle de temps séparant deux positions successives haute et basse du piston;

Q$_{vol,nomi}$ :  valeur du débit d'alimentation en air frais pour un signal de sortie du débitmètre, de la cartographie nominale du débit d'alimentation en air frais, en en mg/coup, un coup étant l'intervalle de temps séparant deux positions successives haute et basse du piston ;

P$_{coll,mes}$ :  valeur de la pression de suralimentation mesurée, en bars ;

P$_{coll,mes,com}$ :  valeur de la pression de suralimentation corrigée, en bars ;

Puis, l'unité de commande électronique 8 régule d'une part la pression de suralimentation corrigée sur sa valeur de consigne, et d'autre part le débit d'alimentation en air frais sur sa valeur de consigne (étape 42).

La présente invention permet de définir des stratégies pour limiter les dispersions de rejets de polluants dans les gaz d'échappement, dues aux dispersions de fabrication des systèmes d'admission, des débitmètres et des capteurs de pression de suralimentation des moteurs.

En outre, en appliquant ces stratégies on réussit à limiter fortement, entre 40% et 70%, lesdites dispersions de rejets de polluants dans les gaz d'échappement, dues aux dispersions de fabrication des organes qui influencent l'aspiration de gaz des moteurs.

**Revendications**

1.  Procédé de contrôle du fonctionnement d'un moteur (1) à allumage par compression de véhicule automobile, suralimenté en air, comprenant les étapes suivantes :

    - on établit une cartographie d'apprentissage, lors des premiers roulages du véhicule, soit d'une grandeur ($\eta_v$) représentative de l'aptitude du moteur (1) à aspirer du gaz, soit d'une caractéristique débit/tension d'un débitmètre mesurant le débit d'alimentation en air frais du moteur (1);
    - on quantifie les deux paramètres que sont soit le débit mesuré d'alimentation en air frais du moteur (1), et la pression corrigée de suralimentation du moteur (1) soit le débit corrigé d'alimentation en air frais du moteur (1) et la pression mesurée de suralimentation du moteur (1);
    - on asservit les deux paramètres sur des valeurs de consigne respectives correspondant à des stratégies de commande du moteur (1);
    - on détermine une valeur corrigée de la pression de suralimentation ou du débit d'alimentation en air frais du moteur (1) à partir d'une cartographie nominale préalablement établie avec un moteur de référence et d'une cartographie apprise en l'absence de recyclage des gaz d'échappement du moteur.

2.  Procédé selon la revendication 1 , **caractérisé par le fait que** l'on établit une cartographie nominale d'une grandeur ($\eta_v$) représentative de l'aptitude du moteur de référence à aspirer du gaz, en l'absence de recyclage des gaz d'échappement du moteur, pour des points de fonctionnement prédéterminés, et dans laquelle sont stockées des valeurs de la grandeur ($\eta_v$) représentative de l'aptitude du moteur de référence à aspirer du gaz en fonction de paramètres de fonctionnement comprenant le régime de rotation du moteur 1 et la densité du gaz présent dans le collecteur d'admission (3).

3.  Procédé selon la revendication 2, **caractérisée par le fait que** l'on établit une cartographie d'apprentissage de la grandeur ($\eta_v$) représentative de l'aptitude du moteur (1) à aspirer du gaz en fonction de paramètres de fonctionnement du moteur (1) comprenant la densité du gaz dans le collecteur d'admission (3) du moteur (1) et le régime de rotation du moteur (1), en mesurant le débit d'alimentation en air frais pour déduire ladite grandeur représentative ($\eta_v$) de l'aptitude du moteur (1) à aspirer du gaz, la cartographie étant établie en l'absence de recyclage des gaz d'échappement du moteur (1).

**4.** Procédé selon la revendication 3, **caractérisé par le fait que** l'on corrige le débit d'alimentation en air frais en utilisant une fonction prédéterminée, prenant en entrée des paramètres comprenant les données des cartographies nominale et d'apprentissage de la grandeur représentative ($\eta_v$) et apte à compenser l'influence des dispersions de fabrication sur les émissions de polluants du moteur (1), et l'on régule d'une part la pression de suralimentation sur une valeur de consigne, et d'autre part le débit corrigé d'alimentation en air frais sur une valeur de consigne.

**5.** Procédé selon la revendication 3, **caractérisé par le fait que** l'on corrige la pression de suralimentation en utilisant une fonction prédéterminée, prenant en entrée des paramètres comprenant les données des cartographies nominale et d'apprentissage de la grandeur représentative ($\eta_v$) et apte à compenser l'influence des dispersions de fabrication sur les émissions de polluants du moteur (1), et l'on régule d'une part la pression de suralimentation corrigée sur une valeur de consigne et d'autre part le débit d'alimentation en air frais sur une valeur de consigne.

**6.** Procédé selon la revendication 2, **caractérisée par le fait que** l'on établit préalablement une cartographie d'apprentissage du débit d'alimentation en air frais en fonction de la tension du débitmètre (10), en simulant artificiellement des variations d'estimation du débit de gaz aspiré par le moteur, résultant de la fabrication du moteur, et en mesurant le débit d'alimentation en air frais résultant, la cartographie étant établie en l'absence de recyclage des gaz d'échappement du moteur (1).

**7.** Procédé selon la revendication 6, **caractérisé par** le- fait que l'on corrige le débit d'alimentation en air frais en utilisant une fonction prédéterminée, prenant en entrée des paramètres comprenant les données des cartographies nominale et d'apprentissage du débit d'alimentation en air frais et apte à compenser l'influence des dispersions de fabrication sur les émissions de polluants du moteur (1), et l'on régule d'une part la pression de suralimentation sur une valeur de consigne, et d'autre part le débit corrigé d'alimentation en air frais sur une valeur de consigne.

**8.** Procédé selon la revendication 6, **caractérisé par le fait que** l'on corrige la pression de suralimentation en utilisant une fonction prédéterminée, prenant en entrée des paramètres comprenant les données des cartographies nominale et d'apprentissage du débit d'alimentation en air frais et apte à compenser l'influence des dispersions de fabrication sur les émissions de polluants du moteur (1), et l'on régule d'une part la pression de suralimentation corrigée sur une valeur de consigne, et d'autre part le débit d'alimentation en air frais sur une valeur de consigne.

**Claims**

**1.** Method for, controlling the operation of a supercharged motor vehicle compression ignition engine (1), comprising the following steps:

- when the vehicle is first driven, a learning map either of a variable ($\eta_v$) representative of the ability of the engine (1) to breathe, or of a flowrate/voltage of a flow meter that measures the flowrate at which the engine (1) is supplied with fresh air, is established;
- the two parameters that are either the measured flowrate at which the engine (1) is supplied with fresh air, and the corrected engine (1) boost pressure, or the corrected flowrate at which the engine (1) is supplied with fresh air and the measured engine (1) boost pressure, are quantified;
- the two parameters are slaved to respective setpoint values corresponding to engine (1) control strategies;
- a corrected value for the engine (1) boost pressure or for the flowrate at which the engine (1) is supplied with fresh air is determined from a nominal map established beforehand using a reference engine and a map learned in the absence of engine exhaust gas recirculation.

**2.** Method according to Claim 1; **characterized in that** a nominal map of a variable ($\eta_v$) representative of the ability of the- reference engine to breathe in the absence of engine exhaust gas recirculation is established for predetermined operating points and values of the variable ($\eta_v$) representative of the ability of the reference engine to breathe as a function of operating parameters including the rotational speed of the engine (1) and the density of the gas in the inlet manifold (3) are stored in this map.

**3.** Method according to Claim 2, **characterized in that** a learning map of the variable ($\eta_v$) representative of the ability of the engine (1) to breathe as a function of engine (1) operating parameters, including the density of the gas in the engine (1) inlet manifold (3) and the rotational speed of the engine (1) is established by measuring the flowrate at which fresh air is supplied in order to deduce the said variable ($\eta_v$) representative of the ability of the engine (1) to breathe, the map being established with no engine (1) exhaust gas recirculation.

**4.** Method according to Claim 3, **characterized in that** the flowrate at which fresh air is supplied is corrected using a predetermined function which as input uses parameters comprising data from the nominal map and the map for learning the representative variable ($\eta_v$) and which is able to compensate for the influence of manufacturing spread on the pollutant emissions of the engine (1), and the boost pressure is set to a setpoint value, and the corrected flowrate at which fresh air is supplied is also set to a setpoint value.

**5.** Method according to Claim 3, **characterized in that** the boost pressure is corrected using a predetermined function that adopts as input parameter's comprising data from the nominal map and map for learning the representative variable ($\eta_v$) and which is able to compensate for the influence of manufacturing spread on engine (1) pollutant emissions, and the corrected boost pressure is set to a setpoint value and the flowrate at which fresh air is supplied is also set to a setpoint value.

**6.** Method according to Claim 2, **characterized in that** a map learning the flowrate at which fresh air is supplied is established in advance as a function of the voltage of the flow meter (10), by artificially simulating variations in the estimated flowrate of gas drawn in by the engine, as a result of the manufacture of the engine, and by measuring the resulting flowrate at which fresh air is supplied, the map being established with no engine (1) exhaust gas recirculation.

**7.** Method according to Claim 6, **characterized in that** the flowrate at which fresh air is supplied is corrected using a predetermined function adopting as input parameters comprising data from the nominal map and the map for learning the flowrate at which fresh air is supplied and which is able to compensate for the influence of manufacturing spread on the engine (1) pollutant emissions, and the boost pressure is set to a setpoint value and the corrected flowrate at which fresh air is supplied is also set to a setpoint value.

**8.** Method according to Claim 6, **characterized in that** the boost pressure is corrected using a predetermined function that adopts as input parameters comprising the data from the nominal map and the map for learning the flowrate at which fresh air is supplied and which is able to compensate for the influence of manufacturing spread on the engine (1) pollutant emissions, and the corrected boost pressure is set to a setpoint value and the flowrate at which fresh air is supplied is also set to a setpoint value.

**Patentansprüche**

**1.** Verfahren zur Regelung des Betriebs eines mit Luft aufgeladenen Selbstzündungsmotors (1) eines Kraftfahrzeugs, das die folgenden Schritte aufweist:

- Erstellen einer Lern-Kartographie während der ersten Fahrten des Fahrzeugs, entweder einer Größe ($\eta_v$), die für die Fähigkeit des Motors (1), Gas anzusaugen, repräsentativ ist, oder eines Durchsatz/Spannungs-Merkmals eines Durchflussmessers, der die Frischluftzufuhr-Durchsatzmenge des Motors (1) misst;
- Quantifizieren der zwei Parameter, die die gemessene Frischluftzufuhr-Durchsatzmenge des Motors (1) und der korrigierte Aufladungsdruck des Motors (1) bzw. die korrigierte Frischluftzufuhr-Durchsatzmenge des Motors (1) und der gemessene Aufladungsdruck des Motors (1) sind;
- Regeln der zwei Parameter auf Sollwerte, die Steuerstrategien des Motors (1) entsprechen;
- Bestimmen eines korrigierten Werts des Aufladungsdrucks oder der Frischluftzufuhr-Durchsatzmenge des Motors (1) ausgehend von einer Nenn-Kartographie, die zuvor mit einem Referenzmotor erstellt wurde, und von einer Kartographie, die in Abwesenheit einer Rückführung der Abgase des Motors gelernt wurde.

**2.** Verfahren nach Anspruch 1, **dadurch gekennzeichnet, dass** eine Nenn-Kartographie einer für die Fähigkeit des Referenzmotors, Gas anzusaugen, repräsentativen Größe ($\eta_v$) in Abwesenheit einer Rückführung der Abgase des Motors für vorbestimmte Betriebspunkte erstellt wird, in der Werte der für die Fähigkeit des Referenzmotors, Gas anzusaugen, repräsentativen Größe ($\eta_v$) in Abhängigkeit von Betriebsparametern gespeichert werden, die die Drehzahl des Motors (1) und die Dichte des Gases enthalten, das im Ansaugkrümmer (3) vorhanden ist.

**3.** Verfahren nach Anspruch 2, **dadurch gekennzeichnet, dass** eine Lern-Kartographie der für die Fähigkeit des Motors (1), Gas anzusaugen, repräsentativen Größe ($\eta_v$) in Abhängigkeit von Betriebsparametern des Motors (1) erstellt wird, die die Dichte des Gases im Ansaugkrümmer (3) des Motors (1) und die Drehzahl des Motors (1) enthalten, indem die Frischluftzufuhr-Durchsatzmenge gemessen wird, um die für die Fähigkeit des Motors (1), Gas anzusaugen, repräsentative Größe ($\eta_v$) abzuleiten, wobei die Kartographie in Abwesenheit einer Rückführung der Abgase des Motors (1) erstellt wird.

4. Verfahren nach Anspruch 3, **dadurch gekennzeichnet, dass** die Frischluftzufuhr-Durchsatzmenge korrigiert wird, indem eine vorbestimmte Funktion verwendet wird, die am Eingang Parameter,aufnimmt, die die Daten der Nenn- und der Lern-Kartographie der repräsentativen Größe ($\eta_v$) enthalten, und die geeignet ist, um den Einfluss von Herstellungsstreuungen auf die Schadstoffemissionen des Motors (1) zu kompensieren, und einerseits, der Aufladungsdruck auf einen Sollwert und andererseits die korrigierte Frischluftzufuhr-Durchsatzmenge auf einen Sollwert reguliert wird.

5. Verfahren nach Anspruch 3, **dadurch gekennzeichnet, dass** der Aufladungsdruck durch Verwendung einer vorbestimmten Funktion korrigiert wird, die am Eingang Parameter aufnimmt, die die Daten der Nenn- und Lern-Kartographien der repräsentativen Größe ($\eta_v$) enthalten, und die geeignet ist, den Einfluss der Herstellungsstreuungen auf die Schadstoffemissionen des Motors (1) zu kompensieren, und einerseits der korrigierte Aufladungsdruck auf einen Sollwert und andererseits die Frischluftzufuhr-Durchsatzmenge auf einen Sollwert reguliert wird.

6. Verfahren nach Anspruch 2, **dadurch gekennzeichnet, dass** zuvor eine Lern-Kartographie der Frischluftzufuhr-Durchsatzmenge in Abhängigkeit von der Spannung des Durchflussmessers (10) erstellt wird, indem künstlich Schätzungsänderungen der vom Motor angesaugten Gasdurchsatzmenge simuliert werden, die von der Herstellung des Motors stammen, und indem die resultierende Frischluftzufuhr-Durchsatzmenge gemessen wird, wobei die Kartographie in Abwesenheit einer Rückführung der Abgase des Motors (1) erstellt wird.

7. Verfahren nach Anspruch 6, **dadurch gekennzeichnet, dass** die Frischluftzufuhr-Durchsatzmenge unter Verwendung einer vorbestimmten Funktion korrigiert wird, die am Eingang Parameter aufnimmt, die die Daten der Nenn- und Lern-Kartographien der Frischluftzufuhr-Durchsatzmenge enthalten, und geeignet ist, den Einfluss der Herstellungsstreuungen auf die Schadstoffemissionen des Motors (1) zu kompensieren, und einerseits der Aufladungsdruck auf einen Sollwert und andererseits die korrigierte Frischluftzufuhr-Durchsatzmenge auf einen Sollwert reguliert wird.

8. Verfahren nach Anspruch 6, **dadurch gekennzeichnet, dass** der Aufladungsdruck unter Verwendung einer vorbestimmten Funktion korrigiert wird, die am Eingang Parameter aufnimmt, die die Daten der Nenn- und Lern-Kartographien der Frischluftzufuhr-Durchsatzmenge enthalten, und geeignet ist, den Einfluss der Herstellungsstreuungen auf die Schadstoffemissionen, des Motors (1) zu kompensieren, und einerseits der korrigierte Aufladungsdruck auf einen Sollwert und andererseits die Frischluftzufuhr-Durchsatzmenge auf einen Sollwert geregelt wird.

# FIG.1

EP 1 519 023 B1

# FIG_2

CONDITIONS
D'APPRENTISSAGE

31

MESURE DEBIT
D'AIR FRAIS
$Q_{vol,mes}$

32

$D_g$ $R_{mot}$ 30

APPRENTISSAGE

$$\eta_{v,appris} = \frac{Q_{vol,mes} \times 4}{1000 \times V_{cyl}}$$

33

CORRECTION

$$Q_{vol,mes,corr} = F_1(Q_{vol,mes}; \eta_{v,nomi}; \eta_{v,appris})$$

REGULATIONS

34

# FIG_3

31

CONDITIONS
D'APPRENTISSAGE

MESURE DEBIT
D AIR FRAIS
$Q_{vol,mes}$

32

$D_g$    $R_{mot}$    30

APPRENTISSAGE

$$\eta_{v,appris} = \frac{Q_{vol,mes} \times 4}{1000 \times V_{cyl}}$$

35

CORRECTION

$$P_{coll,mes,corr} = F_2 \left( P_{coll,mes}; \eta_{v,nom}; \eta_{v,appris} \right)$$

REGULATIONS

34

# FIG_4

31

CONDITIONS
D'APPRENTISSAGE

ESTIMATION

$Q_{vol,nomi}$

38

$D_g$   $R_{mot}$   37

APPRENTISSAGE

$Q_{vol,appris} = Q_{vol,nomi}$

39

CORRECTION

$Q_{vol,mes,corr} = F_3 (Q_{vol,appris} ; Q_{vol,nomi}$

REGULATIONS

40

# FIG_5

**31**

CONDITIONS
D'APPRENTISSAGE

ESTIMATION
$Q_{vol,nomi}$

**38**

$D_g$   $R_{mot}$   **37**

APPRENTISSAGE

$Q_{vol,appris} = Q_{vol,nomi}$

**41**

CORRECTION

$P_{coll,mess,corr} = F_4 (P_{coll,mes}; Q_{vol,nomi}; Q_{vol,appris})$

REGULATIONS

**42**

**EP 1 519 023 B1**

**RÉFÉRENCES CITÉES DANS LA DESCRIPTION**

**Documents brevets cités dans la description**

- DE 19920498